# EUROPEAN PATENT APPLICATION

(11) **EP 3 895 655 A1**
(43) Date of publication of application: **20.10.2021**
(21) Application number: 19909426.9
(22) Date of filing: 17.01.2019
(51) Int. Cl.: A61C 17/02

(54) **NOZZLE FOR ORAL IRRIGATOR, AND ORAL IRRIGATOR HAVING SAME**

(30) Priority: 10.01.2019 CN 201910024304
(71) Applicant: Shanghai Shift Electrics Co., Ltd., Shanghai 201506 (CN); Liu, Dalei, Jinshan Industrial Zone Shanghai 201506 (CN)
(72) Inventor: XU, Zhenwu, Shanghai 201506 (CN); LIU, Dalei, Shanghai 201506 (CN)
(74) Representative: Gulde & Partner
(86) International application number: PCT/CN2019/072230
(87) International publication number: WO 2020/143074

(57) **Abstract**

Provided is a nozzle for an oral irrigator (100), the nozzle comprising: a nozzle body (202); and a housing (204), in which an outlet (2041) is defined, wherein the housing (204) is connected to one end of the nozzle body (202), and defines, with the nozzle body (202), an accommodating cavity (206) in communication with air. Fluid for oral irrigation enters the accommodating cavity (206) through the nozzle body (202), and is sprayed via the outlet (2041) after being mixed with the air.

## Description

### TECHNICAL FIELD

The present invention relates to the field of personal care, in particular to a nozzle for an oral irrigator and an oral irrigator having same.

### BACKGROUND

The current nozzles of the oral irrigator are typically of a s ingle tubular structure, inside which there is a hole-like channel only that is directly connected to the outlet of the oral irrigator or connected to the water outlet of the oral irrigator with a hose. Affected by the nozzle structure of the oral irrigator, the nozzle can only spray water out when ejecting water, but cannot entrap air during ejection to form a water-in-air spray.

### SUMMARY

Based on this, it is necessary to provide a new oral irrigator for the aforementioned technical problems.

According to the present invention, there is provided a nozzle for an oral irrigator, comprising: an outlet; an accommodating cavity in fluid communication with the outlet; a fluid channel for oral irrigation in fluid communication with the accommodating cavity and used to eject fluid for oral irrigation from the outlet through the accommodating cavity; and an air passage, one end of which is in communication with outside atmosphere, and the other end is in communication with the accommodating cavity, so as to drive air to the accommodating cavity under the action of ejection of the fluid for oral irrigation to mix with the fluid for oral irrigation.

In an example, the nozzle for the oral irrigator comprises a nozzle body and a housing connected to the nozzle body, wherein the outlet is defined on the housing, and the accommodating cavity is defined by the housing and the nozzle body.

Optionally, the housing and the nozzle body are fixedly connected in a detachable manner.

Optionally, the housing and the nozzle body are fixedly connected in a non-detachable manner.

Specifically, the housing and the nozzle body are fixedly connected by welding.

More specifically, the housing and the nozzle body are fixedly connected by ultrasonic welding.

In an example, the air passage is defined by the housing or by the nozzle body.

Preferably, the accommodating cavity is arranged closer to the outlet of the nozzle than the inlet of the nozzle. More preferably, the accommodating cavity is arranged on an end side of the outlet of the nozzle.

In another example, the nozzle for the oral irrigator comprises a nozzle body on which the outlet, the accommodating cavity, a fluid channel for pressing, and the air passage are all defined.

According to the present invention, there is further provided a nozzle for an oral irrigator, comprising: a nozzle body; a housing on which an outlet is defined, the housing is connected to one end of the nozzle body, and the housing and the nozzle body define an accommodating cavity in communication with air; wherein the fluid for oral irrigation enters the accommodating cavity through the nozzle body and is sprayed out through the outlet after being mixed with the air.

Specifically, one end of the nozzle body includes an end face and a boss protruding from the end face, and the boss defines a flow channel of the fluid for oral irrigation.

Specifically, the nozzle body defines a flow channel of the fluid for oral irrigation, and the outlet of the housing is substantially aligned with the flow channel.

Specifically, the cross section of the housing is substantially U-shaped.

In an embodiment, the housing and the nozzle body are fixedly connected in a detachable manner.

In another embodiment, the housing and the nozzle body are fixedly connected in a non-detachable manner.

Specifically, the housing and the nozzle body are fixedly connected by welding. More specifically, the housing and the nozzle body are fixedly connected by ultrasonic welding.

In an embodiment, the housing further defines a vent hole communicating with outside such that the accommodating cavity is communicated with air.

In another embodiment, the nozzle body further defines an air flow passage that allows air to flow to the accommodating cavity such that the accommodating cavity is communicated with air.

According to the present invention, there is further provided an oral irrigator comprising the aforementioned nozzle for the oral irrigator.

According to the present invention, there is further provided an oral irrigator, comprising a pressure supply component for providing pressure to the fluid for oral irrigation; a nozzle body whose first end is connected to the pressure supply component; a housing on which an outlet is defined, the housing is connected to one end of the nozzle body, and the housing and the nozzle body define an accommodating cavity in communication with air; wherein the fluid for oral irrigation enters the accommodating cavity through the pressure supply component and the nozzle body and is sprayed out through the outlet after being mixed with the air.

Specifically, the one end of the nozzle body includes an end face and a boss protruding from the end face, and the boss defines a flow channel of the fluid for oral irrigation. More specifically, the outlet of the housing is substantially aligned with the flow channel.

In an example, the cross section of the housing is substantially U-shaped.

Optionally, the housing and the nozzle body are fixedly connected in a detachable manner.

Optionally, the housing and the nozzle body are fixedly connected in a non-detachable manner. Specifically, the housing and the nozzle body are fixedly connected by welding. More specifically, the housing and the nozzle body are fixedly connected by ultrasonic welding.

In an example, the housing further defines a vent hole communicating with outside such that the accommodating cavity is communicated with outside air.

In another example, the oral irrigator further comprises another pressure supply component for providing pressure to air and delivering the air to the accommodating cavity. Specifically, the another pressure supply component comprises a pumping assembly whose output end is connected to the accommodating cavity for pressurizing the air. More specifically, the pumping assembly at least comprises a cylinder, a piston movably connected with the cylinder, and a motor for driving the piston.

By configuring the accommodating cavity to be able to communicate with air, the fluid for oral irrigation is mixed with air (such as air), when the fluid for oral irrigation is ejected, or in other words, the fluid for oral irrigation entraps air such that the air-liquid mixture generates cavitation on the surface to be cleaned under a change in pressure, such as the surface of teeth, and improves the cleaning effect. For example, when teeth are cleaned, the oxygen in the air that is carried enters the closed space, which is beneficial to kill the anaerobic bacteria between the teeth, and maintain oxygen supply therebetween and thereby healthy teeth.

### BRIEF DESCRIPTION OF THE DRAWINGS

FIG. 1 illustrates an oral irrigator according to one embodiment of the present invention;
FIG. 2 is a perspective view of a nozzle structure for an oral irrigator at one angle according to an embodiment as shown in FIG. 1 of the present invention;
FIG. 3 is a perspective view of a nozzle structure for an oral irrigator at another angle according to an embodiment as shown in FIG. 1 of the present invention; and
FIG. 4 illustrates another nozzle structure for an oral irrigator according to an embodiment as shown in FIG. 1 of the present invention.

### DETAILED DESCRIPTION

In order to enable the objects, technical solutions and advantages of the present application to be more apparent, the present application will be further described in detail with reference to the drawings and the exemplary embodiments below. It is to be understood that the specific embodiments described herein are only used to explain but not to limit the present application.

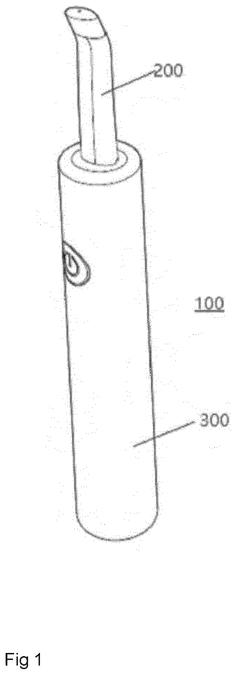

FIG. 1 illustrates an oral irrigator 100 according to one embodiment of the present invention. As shown in FIG. 1, the oral irrigator 100 comprises a pressure supply component and a nozzle structure 200. The pressure supply component is covered by an outer annular housing 300. Therefore, the structure details of the pressure supply component are not shown in the figure. However, those of ordinary skill in the art can easily understand that the pressure supply component can be various existing known structures applied to the oral irrigator 100. These structures have been profusely described in the prior art, which is not detailed here.

As an example, the pressure supply component may comprise a pumping assembly that includes a driving source and a piston cylinder driven by the driving source. Specifically, the driving source may include a motor, and the piston cylinder may include a cylinder and a piston movably connected to the cylinder, wherein the piston is driven by the motor to reciprocate within the cylinder. More specifically, the pressure supply component further comprises a transmission assembly disposed between the motor and the piston. For example, the transmission assembly includes a gear set and a connecting rod, wherein input end of the gear set is connected to output end of the motor; one end of the aforementioned connecting rod is connected to the output end of the gear set to form a crank slider structure, and the other end of the connecting rod is connected to the piston. The aforementioned cylinder includes a channel in fluid communication therewith, and the channel can be flowed with the fluid for oral irrigation, such as water or water with a cleaning agent (e.g., toothpaste, etc.) or a liquid oral cleanser (e.g., mouthwash), etc., into the cylinder and can be pressurized by the action of the piston to form a pressurized fluid for oral irrigation. The pressurized fluid for oral irrigation can be ejected onto the surface to be cleaned through the aforementioned nozzle structure, such as the surface of the human teeth.

Those of ordinary skill in the art shall easily understand that the above description of the pressure supply component is exemplary only and not restrictive. In the present invention, the pressure supply component can use the pressure supply component described herein as an example, or also any existing pressure supply component. Those of ordinary skill in the art can think of enabling to use other pressure supply components to implement the present invention after referring to the above exemplary description.

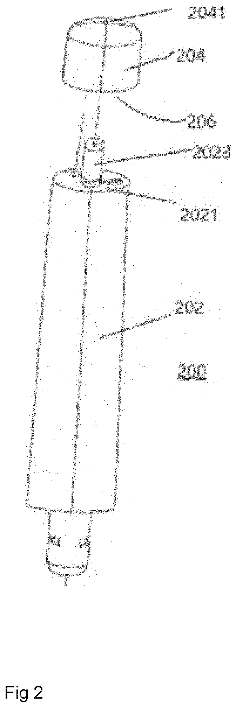

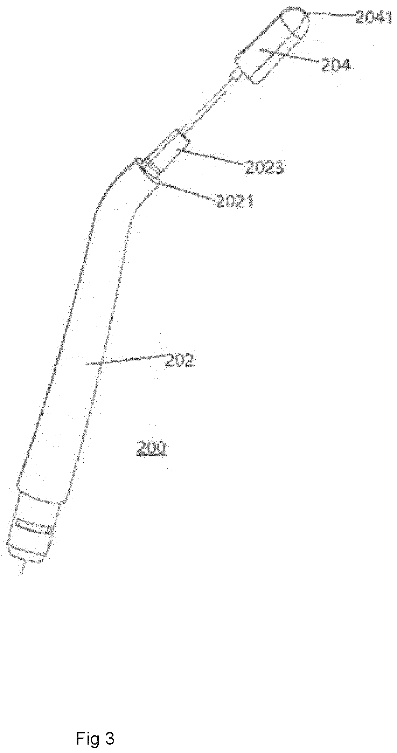

FIG. 2 is a perspective view of a nozzle structure for an oral irrigator at an angle according to an embodiment as shown in FIG. 1 of the present invention. FIG. 3 is a perspective view of a nozzle structure for an oral irrigator at another angle according to an embodiment as shown in FIG. 1 of the present invention. With reference to FIGS. 2-3, the nozzle structure 200 includes a nozzle body 202 and a housing 204, wherein the first end of the nozzle body 202 is connected to the pressure supply component, an outlet 2041 is defined on the housing 204, the housing 204 is connected to the second end of the nozzle body 202, and the housing 204 and the nozzle body 202 define an accommodating cavity 206 that communicates with air.

The second end of the nozzle body 202 includes an end face 2021 and a boss 2023 extending from the end face 2021, wherein the boss 2023 defines a flow channel for fluid for oral irrigation, the flow channel is in fluid communication with the output end of the aforementioned pressure supply component.

The housing 204 is of a sleeve shape with one end closed, and the cross section is generally U-shaped. The open end of the housing 204 can be detachably fixed to the nozzle body 202. In an example, a connecting pin may extend outward on the end face of the open end of the housing 204, as shown in the figure. Correspondingly, a positioning hole can be defined on the end face 2021 of the second end of the nozzle body 202, so that the housing 204 can be connected to the nozzle body 202 through the fit of the connecting pin and the positioning hole. A person of ordinary skill in the art could easily understand that there are a large number of structural designs that are adapted to each other in the prior art to allow the housing 204 to be detachably fixed to the nozzle body 202, such as a threaded connection, which will not be repeated here. It is also easy to understand that, on the one hand, considering the fluid pressure, the fit of the housing 204 and the nozzle body 202 is preferably locking or lockable when in use. On the other hand, in view of the cleaning requirements, the housing 204 and the nozzle body 202 can be disassembled for cleaning or replaced in the non-use state. However, those of ordinary skill in the art can also easily understand that the housing 204 can also be fixed to the nozzle body 202 in a non-detachable manner. For example, the housing 204 can be fixed to the nozzle body 202 by welding, and more specifically, for example, it can be fixed to the nozzle body 202 by ultrasonic welding. It shall be understood that the housing 204 can also be fixed to the nozzle body 202 by bonding.

In addition, considering the smoothness of fluid ejection, the outlet 2041 of the housing 204 and the flow channel of the boss 2023 preferably are approximately aligned, or center-aligned or substantially aligned.

In the following will describe the accommodating cavity 206 communicating with air and defined by the nozzle body 202 and the housing 204.

The accommodating cavity 206 is configured to be able to communicate with air. In an example that is not shown, in addition to the aforementioned outlet 2041, the housing 204 also defines a vent hole communicating with the outside, and the vent hole communicates the outside atmosphere with the accommodating cavity 206. As such, the fluid for oral irrigation enters the accommodating cavity 206 through the pressure supply component and the nozzle body 202 during use, and then is sprayed out through the outlet 2041 on the housing 204. The fluid for oral irrigation is pressurized under the action of the pressure supply component, and hence it has a considerable jet velocity. At this time, the pressure in the accommodating cavity 206 is smaller than the external pressure (atmospheric pressure) of the housing 204 (or a negative pressure zone is formed), and therefore air is easier to enter the accommodating cavity 206 from the vent hole. Then the air is entrapped in the fluid for oral irrigation and sprayed out from the outlet 2041 of the housing 204 onto the surface to be cleaned, such as the surface of human teeth.

In another example that is not shown, on the housing 204 may not be provided the aforementioned vent hole, and on the nozzle body 202 is defined an air flow passage from the outside to the accommodating cavity 206. In this way, the vent hole originally disposed on the housing 204 in the foregoing example is provided on the nozzle body 202. The principle is substantially the same, which is thereby not detailed here. Those of ordinary skill in the art can also easily understand that, on the housing 204 and the nozzle body 202 can be simultaneously provided an air flow passage communicating with the outside in other examples.

In yet another example that is not shown, the air in the accommodating cavity is provided by a special air supply component. Because air and fluid for oral irrigation both are fluids in nature, the pressure supply component at the beginning of this specification can also be used as the air supply component. The air source of the air supply component is generally the atmosphere. It is to be understood that if this structure is adopted, the oral irrigator needs to include a first pressure supply component and a second pressure supply component, wherein the first pressure supply component provides the accommodating cavity with the fluid for oral irrigation, such as water, and the second pressure supply component provides the accommodating cavity with air, such as the pressurized air. The two types of fluids meet in the accommodating cavity, and thus the fluid for oral irrigation will entrap air when sprayed out.

It is also to be understood that in FIGS. 2, 3, and 4 described later, the accommodating cavity 206 is arranged close to the end of the nozzle body, i.e., at the outlet end of the nozzle. However, those of ordinary skill in the art may easily understand that the accommodating cavity 206 only needs to be provided on the flow channel of the fluid for oral irrigation with reference to the disclosure of the description. Preferably, the accommodating cavity 206 can be arranged on the side closer to the outlet of the nozzle than the inlet of the nozzle, and more preferably, it can be arranged at the outlet end side of the nozzle.

By configuring the accommodating cavity 206 to be able to communicate with air, the fluid for oral irrigation is mixed with air (such as air), when the fluid for oral irrigation is ejected, or in other words, the fluid for oral irrigation entraps air such that the air-liquid mixture generates cavitation on the surface to be cleaned under a change in pressure, such as the surface of teeth, and improves the cleaning effect. For example, when teeth are cleaned, the oxygen in the air that is carried enters the closed space, which is beneficial to kill the anaerobic bacteria between the teeth, and maintain oxygen supply therebetween and thereby healthy teeth.

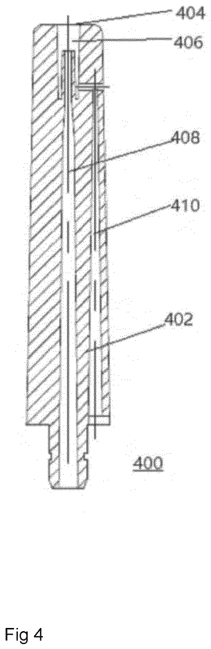

With reference to FIG. 4, it illustrates a nozzle 400 for an oral irrigator according to an embodiment as shown in FIG. 1 of the present invention.

A nozzle body 402 defines an accommodating cavity 406 in communication with the outlet 404 of the nozzle 400.

A fluid channel 408 for oral irrigation is defined to the nozzle body 402 to eject the fluid for oral irrigation.

On end of the air passage 410 that is defined to the nozzle body 402 is in communication with outside atmosphere, and the other end is in communication with the accommodating cavity 406 so that air is delivered to the accommodating cavity 406 under the action of the ejection of the fluid for oral irrigation and mixed with the fluid for oral irrigation.

Specifically, the fluid for oral irrigation may be water, water mixed with a cleaning agent, or a liquid cleaning agent for oral cavity, etc.

Specifically, the nozzle body 402 of the nozzle 400 may be integrated.

According to the structure of the nozzle body 402 of the nozzle 400, those of ordinary skill in the art may separately design and process the front end part and the rear end part of the nozzle body 402 of the nozzle 400 shown in FIG. 4, for example, divide into two parts, that is, the nozzle 400 can still be realized in an non-integral forming manner.

The technical features of the above-mentioned embodiments can be combined arbitrarily. For the sake of conciseness, all possible combinations of the various technical features in the above-mentioned embodiments are not described. The combination of these technical features however shall be considered as the scope recited in this specification as long as there is no contradiction therein.

The above embodiments only illustrate several implementations of the present invention, the description thereof is relatively specific and detailed, but it shall not be understood as a limitation on the scope of the invention patent. It shall be pointed out that for those of ordinary skill in the art, several modifications and improvements can be made without departing from the concept of the present invention, and these all fall within the protection scope of the present invention. Therefore, the protection scope of the present invention patent shall be defined by the appended claims.

## Claims

1. A nozzle for an oral irrigator, comprising:
an outlet;
an accommodating cavity in fluid communication with the outlet;
a fluid channel for oral irrigation in fluid communication with the accommodating cavity and used to eject fluid for oral irrigation from the outlet through the accommodating cavity; and
an air passage, one end of which is in communication with outside atmosphere, and the other end is in communication with the accommodating cavity, so as to drive air to the accommodating cavity under the action of ejection of the fluid for oral irrigation to mix with the fluid for oral irrigation.

2. A nozzle for an oral irrigator according to claim 1, **characterized in that** the nozzle for oral irrigator comprises a nozzle body and a housing connected to the nozzle body, wherein the outlet is defined on the housing, and the accommodating cavity is defined by the housing and the nozzle body.

3. A nozzle for an oral irrigator according to claim 2, **characterized in that** the housing and the nozzle body are fixedly connected in a detachable manner.

4. A nozzle for an oral irrigator according to claim 2, **characterized in that** the housing and the nozzle body are fixedly connected in a non-detachable manner.

5. A nozzle for an oral irrigator according to claim 4, **characterized in that** the housing and the nozzle body are fixedly connected by welding.

6. A nozzle for an oral irrigator according to claim 5, **characterized in that** the housing and the nozzle body are fixedly connected by ultrasonic welding.

7. A nozzle for an oral irrigator according to claim 2, **characterized in that** the air passage is defined by the housing or by the nozzle body.

8. A nozzle for an oral irrigator according to claim 1, **characterized in that** the nozzle for oral irrigator comprises a nozzle body on which the outlet, the accommodating cavity, a fluid channel for pressing, and the air passage are all defined.

9. A nozzle for an oral irrigator according to claim 1, **characterized in that** the accommodating cavity is arranged closer to the outlet of the nozzle than an inlet of the nozzle.

10. A nozzle for an oral irrigator according to claim 9, **characterized in that** the accommodating cavity is arranged on an end side of the outlet of the nozzle.

11. A nozzle for an oral irrigator, comprising:
a nozzle body; and
a housing on which an outlet is defined, the housing is connected to one end of the nozzle body, and the housing and the nozzle body define an accommodating cavity in communication with air;
wherein fluid for oral irrigation enters the accommodating cavity through the nozzle body and is sprayed out through the outlet after being mixed with the air.

12. A nozzle for an oral irrigator according to claim 11, **characterized in that** one end of the nozzle body includes an end face and a boss protruding from the end face, and the boss defines a flow channel of the fluid for oral irrigation.

13. A nozzle for an oral irrigator according to claim 11, **characterized in that** the nozzle body defines a flow channel of the fluid for oral irrigation, and the outlet of the housing is substantially aligned with the flow channel.

14. A nozzle for an oral irrigator according to claim 11, **characterized in that** a cross section of the housing is substantially U-shaped.

15. A nozzle for an oral irrigator according to claim 11, **characterized in that** the housing and the nozzle body are fixedly connected in a detachable manner.

16. A nozzle for an oral irrigator according to claim 11, **characterized in that** the housing and the nozzle body are fixedly connected in a non-detachable manner.

17. A nozzle for an oral irrigator according to claim 16, **characterized in that** the housing and the nozzle body are fixedly connected by welding.

18. A nozzle for an oral irrigator according to claim 17, **characterized in that** the housing and the nozzle body are fixedly connected by ultrasonic welding.

19. A nozzle for an oral irrigator according to claim 11, **characterized in that** the housing further defines a vent hole in communication with outside such that the accommodating cavity is communicated with air.

20. A nozzle for an oral irrigator according to claim 11, **characterized in that** the nozzle body further defines an air flow passage that allows air to flow to the accommodating cavity such that the accommodating cavity is communicated with air.

21. An oral irrigator, comprising a nozzle for oral irrigator according to any one of the preceding claims 1-20.

22. An oral irrigator, comprising:
a pressure supply component for providing pressure to fluid for oral irrigation;
a nozzle body whose first end is connected to the pressure supply component;
a housing on which an outlet is defined, the housing is connected to one end of the nozzle body, and the housing and the nozzle body define an accommodating cavity in communication with air;
wherein the fluid for oral irrigation enters the accommodating cavity through the pressure supply component and the nozzle body and is sprayed out through the outlet after being mixed with the air.

23. An oral irrigator according to claim 22, **characterized in that** one end of the nozzle body includes an end face and a boss protruding from the end face, and the boss defines a flow channel of the fluid for oral irrigation.

24. An oral irrigator according to claim 23, **characterized in that** the outlet of the housing is substantially aligned with the flow channel.

25. An oral irrigator according to claim 23, **characterized in that** a cross section of the housing is substantially U-shaped.

26. An oral irrigator according to claim 22, **characterized in that** the housing and the nozzle body are fixedly connected in a detachable manner.

27. An oral irrigator according to claim 22, **characterized in that** the housing and the nozzle body are fixedly connected in a non-detachable manner.

28. An oral irrigator according to claim 22, **characterized in that** the housing further defines a vent hole in communication with outside such that that the accommodating cavity is communicated with air.

29. An oral irrigator according to claim 22, **characterized in that** the nozzle body further defines an air flow passage that allows air to flow to the accommodating cavity such that the accommodating cavity is communicated with air.

30. An oral irrigator according to claim 22, **characterized in that** the oral irrigator further comprises another pressure supply component for providing pressure to air and delivering the air to the accommodating cavity.

31. An oral irrigator according to claim 30, **characterized in that** the another pressure supply component comprises a pumping assembly whose output end is connected to the accommodating cavity for pressurizing the air .

32. An oral irrigator according to claim 31, **characterized in that** the pumping assembly at least comprises a cylinder, a piston movably connected with the cylinder, and a motor for driving the piston.
